# EUROPEAN PATENT APPLICATION

(11) **EP 1 667 366 A1**
(43) Date of publication of application: **07.06.2006**
(21) Application number: 04729812.0
(22) Date of filing: 28.04.2004
(51) Int. Cl.: H04L 12/28

(54) **A METHOD OF PROCESSING INTELLIGNET SERVICE LOGIC**

(30) Priority: 12.09.2003 CN 03156790
(71) Applicant: Huawei Technologies Co., Ltd., Longgang District, Shenzehen, Guangdong 518129 (CN)
(72) Inventor: BAI, Junqing, Huawei Administration Building, Shenzhen, Guangdong 518129 (CN)
(74) Representative: Charles, Glyndwr
(86) International application number: PCT/CN2004/000414
(87) International publication number: WO 2005/027419

(57) **Abstract**

The present invention discloses a method for processing an intelligent service logic. The method comprises the steps of: setting a function ID for each characteristic of an intelligent service respectively; setting options which can be inputted by subscribers and setting mapping between the options and the function IDs; after receiving an option, the intelligent service logic obtaining the function ID corresponding to the option according to the mapping, and implementing processing of the characteristic corresponding to the function ID. The present invention solves the problem of having to set different service logics to meet different requirements for the same intelligent service in prior art. In terms of the method provided in this inventive scheme, different requirements for intelligent service can be met only through one service logic, which saves development cost and management cost of service logic, and facilitates the service provider to flexibly select desired service characteristics.

## Description

### Field of the Technology

The present invention relates to intelligent service technology in telecommunication network, and more particularly to a method for processing service logic of intelligent service in a telecommunication network.

### Background of the Invention

In a telecommunication network, the application of intelligent service technology is becoming more and more popular, and bringing enormous convenience to people. Intelligent service needs interaction with terminal subscribers through service flow, specifically speaking, when accessing a management function menu, the terminal subscriber chooses operation or inputs information according to a voice prompt broadcasted by intelligent service, a service logic corresponding to this intelligent service executes the subsequent service flow according to the operation of the terminal subscriber.

To extend the application scope of intelligent services, many improved means were put forward. In another patent application named "Methods and devices for realizing service voice dynamic loading on the intelligent network" with 01112891.7 as the Chinese patent application number, the present applicant put forward a method for dynamically loading service voices. In this method, a voice file and a configuration file are scanned by a voice device, in order to dynamically load service voices according to demand of the configuration file at any moment; then the service voice to be dynamically loaded is edited as a service voice file, and this file is placed in the corresponding system folder through carrier; the configuration file is configured for dynamic loading of voice, and the configuration file and the service voice file for dynamic loading of voice are transmitted to a maintenance platform of the system; the system automatically performs dynamic loading according to the configuration file. The action of adding, replacing and deleting voices are supported in this method for dynamically loading voices.

There are multiple kinds of intelligent services and each kind of them holds multiple service characteristics. However, only some service characteristics are needed for service providers and different service providers usually have different requirements. So it is required to set different intelligent service logics for different service providers. For instance, for a prepayment card number service, a management function menu comprises characteristics such as "inquire the balance, modify the password, inquire the abbreviated dial, modify the abbreviated dial, card number recharge, and register the calling number". If all the service characteristics are used, the corresponding voice prompt of this service management function may be "dial 11 to inquire the balance, dial 22 to modify the password, dial 33 to inquire the abbreviated code, dial 44 to modify the abbreviated code, dial 55 to recharge the card number, dial 66 to register the calling number", namely this voice prompt comprises six options, which is called voice 1 here. If the service provider only supplies four characteristics of "modify the password, inquire the abbreviated dial, modify the abbreviated dial, and register the calling number", the content of corresponding voice prompt in voice 1 may be "dial 22 to modify the password, dial 33 to inquire the abbreviated code, dial 44 to modify the abbreviated code, dial 66 to register the calling number", this voice prompt being called voice 2 here. Obviously, the voice prompt with discontinuous options provided by voice 2 has bad operability, so the terminal subscriber will easily input wrong option, leading to executing error of service logic. Therefore, the content of this voice prompt usually needs being modified as "dial 11 to modify the password, dial 22 to inquire the abbreviated code, dial 33 to modify the abbreviated code, dial 44 to register the calling number" according to the characteristic of intelligent service, this voice prompt being called voice 3 here. As for voice 1 and voice 3, the same option corresponds to different service logic content. Taking option 11 for example, it corresponds to "inquire the balance" in voice 1 while "modify the password" in voice 3. If the service logic of voice 1 is adopted by voice 3, the operation of inquiring the balance can still be provided. So different service logics should be set corresponding to different voice prompts.

In a word, the prior intelligent services have the following disadvantages:
1) If multiple requirements are to be supported by a certain intelligent service, it is demanded to develop service logic for each kind of requirement, increasing the development cost of intelligent service.
2) The same kind of intelligent service corresponds to more than one service logic, going against the management for intelligent service and increasing management cost of intelligent service.
3) As for the service provider, if a certain characteristic of intelligent service needs changing, the service logic corresponding to this intelligent service needs changing also, which is inconvenient for the service provider to flexibly add or delete characteristics of intelligent service according to the requirements of subscribers and the market.

### Summary of the Invention

Therefore, a main object of the present invention is to provide a method for processing intelligent service logics so as to provide an intelligent service with different characteristics for the service provider without the need of setting multiple service logics.

In order to achieve the object, the present invention provides a method for processing an intelligent service logic, comprising:
a. setting a function ID for each characteristic of an intelligent service respectively;
b. setting options which can be inputted by subscribers and setting a mapping between the options and the function IDs; and
c. after receiving an option inputted by a subscriber, the intelligent service logic obtaining the function ID corresponding to the option according to the mapping set in step b, and implementing processing of the characteristic corresponding to the function ID.

Step b may further comprise the step of setting voice prompts corresponding to the options to be inputted. In this case, the method further comprises the step of playing the voice prompts before step c .

Step b may further comprises the steps of setting a voice code for each said voice prompt, and setting a mapping among the voice codes, the options and the function IDs.

Voice prompts may be set through dynamic loading.

Before the step of the intelligent service logic obtaining the function ID corresponding to the option in step c, the method may further comprise: the intelligent service logic judging whether there is a function ID corresponding to the option in the mapping set in step b, if so, obtaining the function ID; otherwise, prompting the subscriber that the currently option is wrong, and replaying the voice prompt.

Before the step of the intelligent service logic obtaining the function ID corresponding to the option in step c, the method may further comprise: the intelligent service logic judging whether there is a function ID corresponding to the option in the mapping set in step b, if so, obtaining the function ID; otherwise, prompting the subscriber that the currently option is wrong.

Step b may further comprise the step of setting the mapping between options and function IDs as a configuration file or a configuration table. In this case, the step of the intelligent service logic determining the function ID corresponding to the option based on the mapping in step c comprises determining the function ID based on the configuration file or the configuration table.

It can be seen from the scheme according to the present invention, by means of dynamically configuring the management function menu, that is, configuring a unique function ID corresponding to a certain characteristic of an intelligent service, and setting the options corresponding to the characteristics in need and the mapping between the function IDs and the options, the system can determine the intelligent service characteristic corresponding to the current option through the function ID corresponding to the inputted option and performs subsequent processing. In this way, only one service logic is needed for each intelligent service to meet different requirements of intelligent service from different service providers, saving development cost and facilitating intelligent service management.

Furthermore, in the present invention, by presetting constant function IDs for characteristics of an intelligent service, the correspondence relation between the options to be inputted by the subscribers and function IDs can be flexibly set according to requirement of the service providers. In other word, the service provider can modify the options corresponding to the function IDs according to requirements of itself. Therefore, the service provider can flexibly select desired service characteristics in this scheme according to the present invention.

### Brief Description of the Drawings

Figure 1 is a flow chart of configuring intelligent service characteristics according to an embodiment of the present invention.
Figure 2 is a flow chart of processing intelligent service logics according to the configuration in the embodiment of the present invention.

### Detailed Description of the Invention

In an embodiment of the present invention, firstly a corresponding function ID is set for each characteristic of an intelligent service, and mapping between the function IDs required by a service provider and the options inputted by a subscriber is set. And, the service logic in the system obtains the function ID corresponding to the input of the subscriber according to this mapping and determines the subsequent processing of service logic according to intelligent service characteristic corresponding to this function ID.

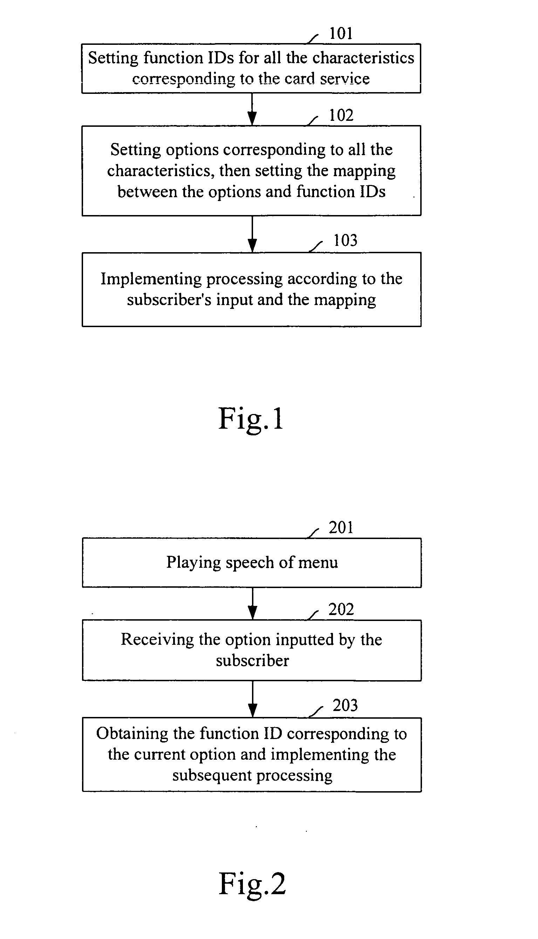

Now, the embodiment of the present invention will be described in detail taking a card service for example. With reference to figure 1, the embodiment comprises the following steps.

In step 101, function IDs are set for all the characteristics supported by a card service.

Assuming that a management function menu of the card service comprises characteristics of "calling, inquiring the balance, modifying the password, inquiring the abbreviated dial, modifying the abbreviated dial, returning to the upper menu, playing the submenu, directly accessing management function menu", an a function ID is set for each characteristic respectively, for example, function ID of "calling" is set at 1, function ID of "inquiring the balance" at 2, function ID of "modifying the password" at 3, function ID of "inquiring the abbreviated dial" at 4, function ID of "modifying the abbreviated dial" at 5, function ID of "returning to the upper menu" at 0, function ID of "playing the submenu" at -1, function ID of "directly accessing management function menu" at -2.

In step 102, corresponding options are set in terms of the characteristics required by the service provider, and mapping between the options and function IDs is set.

Assuming that only part of the characteristics supported by the management function menu of card service are required by the service provider, including "calling, inquiring the balance, modifying the password, inquiring the abbreviated dial, returning to the upper menu, directly accessing management function menu", then it may be set that the option of "calling" is telephone number plus #, that of "inquiring the balance" is 11, that of "modifying the password" is 22, that of "inquiring the abbreviated dial" is 33, that of "returning to the upper menu" is #, that of "directly accessing management function menu" is #. The other inputted data are denoted as x for convenient explanation.

Correspondingly, a voice prompt corresponding to the management function menu of this card service is to be set, for example, two voice prompts as "please input the phone number or abbreviated dial to be called and press # to confirm, directly press # to enter the management function menu" and "dial 11 to inquire your balance, dial 22 to modify your password, dial 33 to inquire your abbreviated dial, dial # to return to the upper menu" are set, the system sets voice code 1 and voice code 2 respectively for these two voice prompts and sets corresponding voice IDs. By configuring like this, when the system is playing the voice prompt corresponding to voice code 1 and if the subscriber directly dials # for "playing the management function menu", the voice prompt corresponding to voice code 2 is played; when the system is playing the voice prompt corresponding to voice code 2 and if the subscriber dials # for "returning to the upper menu", the voice prompt corresponding to voice code 1 is played.

Then, mapping of all configuration data is set, and a list or a configuration file is set in the intelligent platform of the system to store this mapping, which is shown in table 1.

**Table 1**

| Voice code | Input of subscriber | Function ID | Sub voice code | Description |
|---|---|---|---|---|
| Voice code 1 | # | -2 | Voice code 2 | Accessing management function menu, playing voice code 2 |
| Voice code 1 | Telephone number # | 1 | | Starting calling flow |
| Voice code 2 | 11 | 2 | | Inquiring the balance |
| Voice code 2 | 22 | 3 | | Modifying the password |
| Voice code 2 | 33 | 4 | | Inquiring the abbreviated dial |
| Voice code 2 | x | -1 | Voice code 2 | Replaying management function menu, playing voice code 2 |
| Voice code 2 | # | 0 | Voice code 1 | Returning to the upper menu, playing voice code 1 |

In step 103, the system implements processing in accordance with the input of the subscriber and the mapping set in step 102.

With reference to figure 2, this processing flow is implemented through the following steps.

In step 201, the system plays a voice prompt.

The voice prompt corresponding to voice code 1 can be played. Specifically speaking, the system obtains the voice ID according to the voice code and plays a voice prompt by means of the voice ID.

In steps 202~203: after obtaining the option of the subscriber's input, the system obtains the function ID corresponding to the currently inputted option according to the mapping between the options and function IDs stored in the system, and determines the following processing according to the characteristic of this function ID.

In this step, if the subscriber input information is "telephone number #", the system determines that the function ID corresponding to the input information is 1, then calling flow is implemented; if the subscriber input information is "#", the system obtains the function ID corresponding to "#" is 2, and the flow of playing the management function menu is implemented, namely the voice prompt corresponding to voice code 2 is played.

After playing the voice prompt corresponding to voice code 2, if the subscriber continues to input an option and the inputted option is 11, the system determines from the stored mapping that the function ID corresponding to the subscriber input information is 2 and the characteristic to which ID2 corresponds is "inquiring the balance", accordingly the flow of inquiring the balance is implemented; if the subscriber inputs other data such as 123, the system obtains that the corresponding function ID is -1 and the characteristic to which ID-1 corresponds is "replaying the management function menu", accordingly the flow of replaying management function menu is implemented; if the subscriber inputs #, the system determines that the corresponding function ID is 0 and the characteristic to which ID0 corresponds is "replaying the upper menu", accordingly the flow of replaying the upper menu is implemented. In the case that returning to the upper menu or replaying managing function menu is needed, the system needs to obtain corresponding voice ID with reference to voice code and play voice prompt in term of voice ID.

In addition, there may be a condition that no function ID corresponds to the subscriber's input number, so the system needs to implement corresponding judgment For instance, before obtaining the option ID corresponding to the subscriber's input option, the system judges whether or not there is a function ID corresponding to the current option according to the mapping between options and function IDs stored in the system, if so, the next processing is determined in term of the current function ID; otherwise, the system prompts the subscriber of wrong input option and returns to step 201 for re-playing a voice prompt.

In the above embodiment, all characteristics of a card service are adopted. If the service provider requires removing some of the characteristics in the card service, what is needed is just to modify the mapping between the options and function IDs together with the corresponding voice prompts. For example, if the service provider requires removing "inquiring the balance", what is needed is just to set "modifying the password" at 11, "inquiring the abbreviated dial" at 22, "modifying the abbreviated dial" at 33, "returning to the upper menu" at #, and accordingly modify the voice prompt, then set the mapping between the options and function IDs and store the relationship. In this way, the system can implement processing according to the subscriber's input option and the mapping. As for modifying voice prompt, the voice prompt corresponding to voice code 2 can be modified as "dial 11 to modify your password, dial 22 to inquire your abbreviated dial, dial 33 to modify your abbreviated dial, dial # to return to the upper menu", and the dynamic loading method can be adopted to modify the voice prompt.

After "inquiring the balance" is removed, the mapping between the options and function IDs in the card service is shown in table 2.

**Table 2**

| Voice code | Input of subscriber | Function ID | Sub voice code | Description |
|---|---|---|---|---|
| Voice code 1 | # | -2 | Voice code 2 | Accessing management function menu, playing voice code 2 |
| Voice code 1 | Telephone number # | 1 | | Starting calling flow |
| Voice code 2 | 11 | 3 | | Modifying the password |
| Voice code 2 | 22 | 4 | | Inquiring the abbreviated dial |
| Voice code 2 | 33 | 5 | | Setting the abbreviated dial |
| Voice code 2 | x | -1 | Voice code 2 | Replaying the sub menu, playing voice code 2 |
| Voice code 2 | # | 0 | Voice code 2 | Returning to the upper menu, playing voice code 1 |

Therefore, it is appreciated that the foregoing description is a demonstration of the present invention rather than a limitation to the present invention.

## Claims

1. A method for processing an intelligent service logic, comprising:
a. setting a function ID for each characteristic of an intelligent service respectively;
b. setting options which can be inputted by subscribers and setting a mapping between the options and the function IDs; and
c. after receiving an option inputted by a subscriber, the intelligent service logic obtaining the function ID corresponding to the option according to the mapping set in step b, and implementing processing of the characteristic corresponding to the function ID.

2. The method of claim 1, step b further comprising the step of setting voice prompts corresponding to the options to be inputted; and
the method further comprising the step of playing the voice prompts before step c .

3. The method of claim 2, step b further comprising the steps of setting a voice code for each said voice prompt, and setting a mapping among the voice codes, the options and the function IDs.

4. The method of claim 2, wherein setting voice prompts includes: setting voice prompts through dynamic loading.

5. The method of claim 2 or 3 or 4, before the step of the intelligent service logic obtaining the function ID corresponding to the option in step c, further comprising: the intelligent service logic judging whether there is a function ID corresponding to the option in the mapping set in step b, if so, obtaining the function ID; otherwise, prompting the subscriber that the currently option is wrong, and replaying the voice prompt.

6. The method of claim 1, before the step of the intelligent service logic obtaining the function ID corresponding to the option in step c, further comprising: the intelligent service logic judging whether there is a function ID corresponding to the option in the mapping set in step b, if so, obtaining the function ID; otherwise, prompting the subscriber that the currently option is wrong.

7. The method of claim 1 or 3, step b further comprising the step of setting the mapping between options and function IDs as a configuration file or a configuration table; and
wherein the step of the intelligent service logic determining the function ID corresponding to the option based on the mapping in step c comprises determining the function ID based on the configuration file or the configuration table
